# FASCICULE DE BREVET EUROPEEN

(11) **EP 0 678 485 B1**
(45) Date de publication et mention de la délivrance du brevet: **05.12.2001**
(21) Numéro de dépôt: 95400842.1
(22) Date de dépôt: 13.04.1995
(51) Int. Cl.: C03C 17/38, G02B 1/10

(54) **Procédé de dépôt d'un revêtement protecteur pour élément vitré à couches**
Verfahren zur Herstellung einer Schutzbeschichtung für Schichtverglasungselement
Method of producing a protective coating for layered glazing element

(30) Priorité: 18.04.1994 FR 9404611
(43) Date de publication de la demande: 25.10.1995
(73) Titulaire: SAINT-GOBAIN GLASS FRANCE, 92400 Courbevoie (FR)
(72) Inventeur: Rasker, Erik, B-2100 Deurne (BE); Halleux, Jean-Marc, B-5081 La Bruyere (BE)
(74) Mandataire: Renous Chan, Véronique

(56) Documents cités:
- EP-A- 0 396 449
- WO-A-91/16197
- DATABASE WPI Week 7913 Derwent Publications Ltd., London, GB; AN 79-24443B & JP-A-54 022 216 (NISHIMURA H) , 20 Février 1979
- CHEMICAL ABSTRACTS, vol. 109, no. 2, 11 Juillet 1988 Columbus, Ohio, US; abstract no. 10647z, page 261; & DD-A-252 368 (VEB LACKFABRIK DRESDEN) 16 Décembre 1987

## Description

L'invention concerne les éléments vitrés à couches, et tout particulièrement les éléments vitrés essentiellement opaques comme les miroirs et les parements de panneau de façade (ces derniers seront ci-après simplement désignés sous le terme de "parements").

Miroirs et parements sont soumis à des conditions d'utilisation assez différentes, puisque les premiers sont plutôt destinés à équiper l'intérieur d'habitacles tandis que les seconds sont exposés à l'extérieur, dans des façades. Cependant, dans un cas comme dans l'autre, il est utile voire indispensable de prévoir des revêtements protecteurs "côté couches", afin d'éviter leur détérioration par des phénomènes de corrosion pouvant être aussi bien de nature mécanique que chimique.

Il est ainsi connu de la demande de brevet EP-A-0 528 710 de munir le parement d'une sur-couche optionnelle de protection, sur-couche dite anti-abrasion en nitrure de titane déposée par une technique de pulvérisation cathodique réactive. Ce type de revêtement est effectivement connu pour sa dureté, sa résistance mécanique, cependant son procédé de dépôt nécessite une installation fonctionnant sous vide et des appareillages relativement complexes.

Par ailleurs, il est également connu du brevet US-5,096,785 un type de miroir consistant en un substrat de verre recouvert d'une couche d'argent puis d'une couche de cuivre. L'empilement est ensuite protégé par dépôt d'une peinture ou laque sous forme liquide, peinture que l'on sèche par chauffage du substrat. La peinture telle que projetée sur le substrat recouvert contient au moins 35 % de solvant et est de préférence déposée en deux couches, la dernière couche présentant une fois séchée une dureté supérieure à la première. Le mode d'obtention d'un tel revêtement protecteur n'est pas dénué d'inconvénients. En effet, le séchage de la peinture implique l'évaporation d'une quantité significative de solvants organiques, toxiques à des degrés divers et de toute façon inflammables. Cette étape de l'évaporation est donc non seulement coûteuse en temps et en énergie dissipée par chauffage, mais elle pose en outre des problèmes de pollution, car il faut « piéger » et retraiter ces solvants après évaporation. Par ailleurs, si l'on dépose la peinture en deux fois, ce qui est assez usuel, on allonge encore le cycle de fabrication.

Il est connu du document WO-A-91/16197 des miroirs comportant un substrat transparent sur lequel on dépose successivement par pulvérisation une couche de primage, une couche réfléchissante du type argent puis une couche-barrière protégeant la couche réfléchissante de la corrosion. L'ensemble des couches est ensuite surmonté d'un revêtement protecteur à base de polymère et dépourvu de plomb.

L'invention a alors pour but de proposer un autre type de revêtement protecteur pour éléments vitrés opaques à couches, revêtement qui remédie aux inconvénients précités, notamment en étant à la fois performant quant à la durabilité qu'il confère aux éléments vitrés et de mode d'obtention simple.

L'invention a pour objet un élément vitré à couches et essentiellement opaque, notamment un miroir ou un parement de panneau de façade du type allège. L'élément vitré est, selon l'invention, muni « côté couches » d'un revêtement superficiel de vernis protecteur comprenant au moins un polymère thermodurcissable ou thermoplastique déposé sous forme solide, notamment sous forme de poudre ou de mélange de poudres, puis traité notamment thermiquement, afin d'obtenir un revêtement continu voulu.

Dans le contexte de l'invention, le terme de « traité thermiquement » signifie que les particules constitutives de la poudre coalescent et forment un film continu, notamment sous l'effet de la chaleur permettant soit la réticulation entraînant le durcissement du ou des polymères thermodurcissables, soit la fusion du ou des polymères thermoplastiques contenus dans ladite poudre.

Les avantages d'un tel revêtement sont multiples. D'une part, il s'est révélé de qualité et parfaitement apte à protéger tout type d'empilements de couches. En effet on peut sélectionner, dans la famille très large des polymères soit thermodurcissables, soit thermoplastiques, tel ou tel polymère qui sera le plus adapté en fonction du type de corrosion auquel sera soumis l'élément vitré en question. D'autre part, choisir une voie d'obtention « tout solide » permet de supprimer les risques de problèmes liés à une utilisation massive de solvants organiques. Ainsi, on durcit/traite thermiquement le polymère sans dissiper inutilement de l'énergie et du temps à évaporer le solvant, et les risques de pollution s'en trouvent extrêmement diminués. On peut en outre très facilement recycler la poudre qui n'aurait pas été utilisée ou projetée hors de la surface de l'élément vitré à recouvrir. Le rendement matière est excellent. Globalement, on obtient donc un gain de productivité sensible, sans avoir cependant nécessairement recours à des techniques sophistiquées, nécessitant par exemple d'opérer sous vide.

Il n'était cependant pas évident au départ que de tels résultats seraient obtenus, et notamment que la suppression du solvant n'affecte pas la qualité du revêtement protecteur.

En effet, il paraît concrètement assez facile de parvenir à déposer sur l'élément vitré à couches une couche d'épaisseur uniforme de peinture liquide dans laquelle les particules de précurseurs de polymère sont dispersées de manière relativement homogène, une phase liquide favorisant un "nappage" régulier sur le substrat par une certaine adhérence de la peinture au substrat.

Dans le cas où les particules solides sont projetées telles quelles sur l'élément vitré, la situation est très différente, puisque ces particules, non liées entre elles par un solvant, peuvent "rouler" librement à la surface de l'élément. On pouvait donc craindre d'abord que la distribution homogène de la poudre sur l'élément vitré à recouvrir soit malaisée à obtenir, ensuite que la coalescence des particules s'effectue de manière imparfaite, ce qui pouvait aboutir à des revêtements d'épaisseur irrégulière, voire non continus. Or, de manière surprenante, le dépôt des particules puis leur coalescence ne se sont pas révélés problématiques, et les revêtements obtenus présentent une régularité d'épaisseur satisfaisante, un aspect assez lisse de surface et une bonne adhérence aux couches sous-jacentes.

Comme signalé précédemment, le choix du type de polymère dépend du type d'élément vitré à protéger et de la nature des attaques qu'il subirait une fois en place.

Ainsi ce polymère est avantageusement choisi à base de résines époxydes, éventuellement contenant des durcisseurs usuels du type amine ou anhydride, de résines polyesters ou époxydes-polyesters, ou encore de résines polyuréthanes, de résines acryliques, ou de résines polyamides, toutes ces résines se prêtent aisément à une réduction en poudre.

Les résines peuvent être associées à d'autres éléments, également sous forme de particules solides, et notamment tout type de charge ou tout type de pigment pour obtenir une coloration donnée.

Le revêtement selon l'invention, afin de pouvoir protéger efficacement les couches des éléments vitrés, doit présenter une épaisseur suffisante, qui est de préférence d'au moins 30 micromètres, et notamment une épaisseur comprise entre 30 et 200 micromètres entre 40 et 100 micromètres, avantageusement comprise entre 60 et 80 micromètres.

Si l'élément vitré est spécifiquement un miroir, il est important que le revêtement puisse protéger les couches du miroir de la buée, de la chaleur par exemple. Il est également important que le miroir, une fois constitué, puisse être découpé aux dimensions voulues, sans que l'opération de découpe n'entraîne un écaillage au niveau des bords. Il est alors avantageux que le revêtement superficiel selon l'invention puisse présenter un caractère suffisamment « cassant » pour être découpé sans créer de défauts périphériques. On peut, pour ce faire, avantageusement moduler la proportion entre le(s) polymère(s) thermodurcissable(s) ou thermoplastique(s) approprié(s) et des charges spécifiques, afin d'obtenir un revêtement à la fois relativement rigide et adhérent aux couches sous-jacentes. Un type de polymère thermodurcissable particulièrement adapté est à base de résine polyépoxyde ou époxyde polyester.

Dans le cas des miroirs, il découle de l'invention un avantage supplémentaire inattendu : il devient envisageable de déposer directement le revêtement de vernis protecteur sur la couche d'argent, qui peut optionnellement être préalablement traitée avec un agent promoteur d'adhérence, par exemple du type silane. On peut ainsi choisir de supprimer la couche de cuivre "intermédiaire" que l'on prévoyait jusqu'alors usuellement entre couche d'argent et vernis final dans les structures de miroirs "à l'argent" classiques. Les avantages sont importants, car, en supprimant ainsi une étape de production, on diminue d'autant le temps de cycle de fabrication du miroir et les coûts de matières premières.

En outre, il est fréquent que la couche de cuivre habituelle soit déposée par voie chimique, ce qui impose un recyclage et un retraitement des eaux dites de "cuivrage". Si l'on supprime la couche de cuivre, ces opérations de retraitement n'ont plus lieu d'être, et, là encore, l'invention va dans le sens d'une limitation des sources de pollution.

Dans le cas où l'élément vitré est plutôt un parement de panneau de façade du type allège, comme par exemple celui décrit dans la demande EP-0 528 710 pré-citée, celui-ci, une fois monté en façade, va se trouver soumis aux conditions atmosphériques extérieures. Le choix du polymère thermodurcissable ou thermoplastique va donc de préférence se tourner vers ceux qui sont aptes à supporter sans vieillir les rayonnements solaires, notamment les ultra-violets, ainsi que les écarts de température importants et l'eau. Le polymère est alors avantageusement sélectionné parmi les résines polyesters, polyuréthanes ou polyamides, pouvant contenir différents additifs adaptés si besoin pour leur conférer les propriétés voulues.

L'invention a également pour objet un procédé de dépôt d'un revêtement superficiel de vernis protecteur sur un élément vitré à couches et essentiellement opaque, notamment un miroir ou un parement de panneau de façade du type allège.

Selon le procédé, on projette sur ledit élément vitré une poudre ou un mélange de poudres comprenant au moins un polymère et éventuellement charge(s) et/ou pigment(s), puis on laisse la poudre coalescer et durcir sur l'élément vitré par un traitement thermique approprié, pour obtenir finalement un revêtement continu et solide. Une simple projection de la poudre en suspension dans un courant de gaz, notamment par un système de buses de pulvérisation ou "pistolets" animés d'un mouvement relatif approprié par rapport à l'élément vitré à recouvrir, peut ainsi suffir.

Afin que les particules de poudre se répartissent au mieux à la surface de l'élément vitré, et coalescent entre elles de manière adéquate, il n'est pas indifférent de choisir soigneusement la plage de répartition granulométrique de celles-ci, ainsi que la proportion de ses constituants, dont le polymère et les charges, proportion qui, comme on l'a évoqué précédemment, joue également un rôle sur la capacité du miroir à être découpé sans provoquer des défauts de bord par écaillage.

Comme précédemment souligné, de nombreux types de polymères, notamment thermodurcissables, se prêtent à un tel procédé, comme les résines époxydes, polyesters, époxydes-polyesters, polyuréthanes ou acryliques.

La coalescence et le durcissement de la poudre ou du mélange de poudres sont assurés préférentiellement par chauffage de l'élément vitré une fois la projection de poudre(s) réalisée. La température à atteindre et le laps de temps nécessaire à cette phase de durcissement et de formation du revêtement continu dépendent largement du type de polymère envisagé. De manière générale, on préconise un chauffage à une température avantageusement comprise entre 50 et 250°C, notamment entre 60 et 200°C, pendant 3 à 30 minutes par exemple. Pour faciliter cette opération, il est possible de pré-chauffer plus ou moins l'élément vitré avant la projection de poudre(s).

Un tel procédé permet, par un dépôt d'une quantité de poudre appropriée, d'obtenir des revêtements de vernis protecteur ayant une épaisseur d'au moins 30 micromètres, notamment comprise entre 30 et 200 micromètres, par exemple 40 et 100, tout particulièrement entre 30 et 120 micromètres ou entre 60 et 80 micromètres. Il est à noter que ce revêtement peut être obtenu avec une unique projection de poudre(s), ce qui est nettement plus simple et rapide que les dépôts en deux temps usuellement recommandés dans le cas des peintures liquides.

On peut également envisager dans le cadre de l'invention d'assister le dépôt par champ électro-statique. Il est en effet possible de charger électriquement les particules de poudre à l'aide d'un champ électrostatique, la tension à imposer dépendant notamment de la taille de celles-ci.

D'autres détails et caractéristiques avantageuses de l'invention ressortent de la description ci-après d'exemples de réalisation non limitatifs.

Une première série d'exemples 1 à 3 concerne des miroirs, dits "miroirs à l'argent", mais peuvent aisément être transposés à des parements, à la condition d'adopter en conséquence le choix du polymère thermodurcissable ou thermoplastique du vernis protecteur.

Des tests de durabilité ont été conduits en s'inspirant du projet de norme européen référencé CEN.TC 129-GT5, tests décrits ci-après :
- le test 1 du brouillard salin : ce test, décrit dans la norme ISO 9227, consiste à plonger le miroir dans un brouillard salin neutre obtenu à partir de sel NaCI à 50 g/l, ceci à une température de 35°C et avec un pH compris entre 6,5 et 7,2 pendant 480 heures. Le miroir est dit respecter les conditions du projet de norme européenne s'il emplit les deux conditions suivantes en fin de test. Il doit d'abord présenter une attaque de ses bords horizontaux et verticaux inférieure à 1500 micromètres. Il doit en outre présenter au plus 2 piqûres en pleine surface de profondeur inférieure à 3 millimètres, et au plus 5 piqûres en pleine surface de profondeur inférieure à 0,3 millimètre.
- le test 2 dit "Cass Test" : ce test décrit dans la norme ISO 9227 consiste à plonger le miroir dans un brouillard obtenu à partir d'une solution saline constituée d'un mélange de NaCI à 50 g/l ; de 0,26 g de CuCl₂, 2H₂O et de 50 ml d'acide acétique à une température de 50°C et un pH compris entre 3,1 et 3,3 pendant 120 heures. Le miroir doit notamment présenter au plus deux piqûres en pleine surface de profondeur inférieure à 3 millimètre et au plus 3 piqûres de profondeur inférieure à 0,3 millimètres.

La poudre utilisée permettant d'obtenir le revêtement de vernis protecteur selon l'invention est dans les exemples suivants une poudre référencée POX 011 commercialisée par la société Flanders Powder et à base de résine époxy.

### EXEMPLE 1

L'exemple 1 suivant concerne un miroir à l'argent usuel avec couche de cuivre. Il est fabriqué schématiquement de la manière suivante : on utilise un substrat de verre flotté silicosodocalcique de 4 mm d'épaisseur et d'une surface de 7,5 m² qui circule d'un poste de travail à l'autre selon un rythme et un axe prédéfinis dans la ligne de production.

On commence par effectuer l'avivage de la face du substrat destinée à recevoir le revêtement réfléchissant, avivage qui se décompose usuellement en deux étapes : une phase de polissage puis une phase de sensibilisation.

Le polissage se fait par abrasion à l'aide de particules appropriées en suspension dans un liquide projeté sur le substrat, en association avec l'utilisation de brosses rotatives. Il se termine par un lavage du substrat.

La sensibilisation de la face polie du substrat se fait à l'aide d'une solution de chlorure stanneux et se termine également par un lavage du substrat.

Puis on dépose, toujours de manière connue, une couche d'argent de 95 nm d'épaisseur par voie chimique, à l'aide de solutions de nitrate d'argent. Est ensuite déposée, toujours par voie chimique, une couche de cuivre d'épaisseur environ 33 nm à l'aide d'une solution de sel de cuivre.

On projette ensuite la poudre d'époxyde en suspension dans de l'air à l'aide de pistolets de distribution de structure usuelle avec assistance électro-statique, lesdits pistolets étant animés d'un mouvement de va-et-vient selon un axe approximativement perpendiculaire à l'axe de défilement du substrat de verre, de manière à ce que les jets de poudre issus de l'ensemble des pistolets puissent atteindre la totalité de la surface du substrat à recouvrir.

On fait ensuite passer le substrat ainsi traité dans un tunnel à infrarouges pendant
5 minutes afin de durcir la poudre en faisant réticuler le polymère qu'elle contient. A la fin de cette opération de chauffage, on obtient un revêtement continu de 30 à 60 micromètres d'épaisseur d'aspect lisse et brillant, de couleur voulue, ici claire. Le miroir ainsi obtenu est ensuite découpé aux dimensions voulues.

### EXEMPLE 2

L'exemple 2 est similaire à l'exemple 1, sauf que l'on effectue ici un traitement de surface de la couche de cuivre à l'aide d'un agent promoteur d'adhérence à base de silane, notamment choisi dans la famille de composés silanes appelée DYNASYLAN et commercialisée par la Société de produits chimiques HÛLS TROISDORF AG, comprenant notamment les produits « AMEO », « MEMO » ou « GLYMO ».
Ces silanes sont choisis de préférence dans la famille des organotrialkoxysilanes de formule RSi(OR')₃. On peut citer, notamment, l'amino-propyl-triéthoxysilane de formule : H₂N-(CH₂)₃-Si-O(C₂H₅)₃,
le métacrylate-propyl-triméthoxysilane de formule : 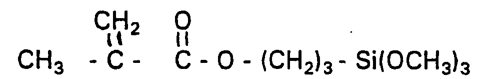 le glycidoxy-propyl-triméthoxysilane de formule : 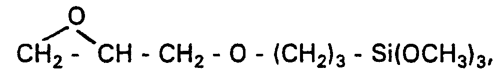 ou encore un silane à deux fonctions amine du type :

H₂N - (CH₂)₂ - NH - (CH₂)₃ - Si-O(CH₃)₃.

### EXEMPLE 3

L'exemple 3 est similaire à l'exemple 2, sauf que le substrat ne comporte pas cette fois de couche de cuivre et que l'on projette donc directement la poudre à base de résine époxyde sur la couche d'argent, qui a été cependant préalablement traitée avec un agent promoteur d'adhérence à base de silane semblable à celui utilisé dans l'exemple 2.

Les miroirs selon ces trois exemples ont été soumis aux tests dits test du brouillard salin et « cass test » comme précédemment expliqué. Ils passent avec succès les deux tests concernant le nombre et la taille des piqûres en pleine face. Concernant la mesure des attaques des bords selon le test du brouillard neutre salin, ils présentent des attaques d'au plus 225 micromètres, et d'environ 50 micromètres pour l'exemple 1 notamment. Ils sont donc également conformes sur ce point.

Une seconde serie d'exemple 4 à 7 concernent cette fois des parements de panneaux de façade appelés allèges.

Des tests d'adhérence, de dureté et de durabilité ont été réalisés sur les allèges utilisant le revêtement de vernis protecteur selon l'invention. Ces tests sont décrits ci-après:
- le test 1 d'adhérence dit « Pull-Out Test » (norme ISO 4624) consiste à mesurer la force nécessaire pour arracher le revêtement protecteur au moyen d'un dispositif de traction,
- le test 2 de mesure de dureté a été effectué au moyen d'un scléromètre. La force nécessaire pour réaliser une empreinte atteignant le substrat au moyen d'une bille d'un diamètre de 0,75 mm est déterminée,
- le test 3 de vieillissement en présence de gaz SO₂ est décrit dans la norme DIN 50.018. Il consiste à soumettre l'élément vitré recouvert d'un film protecteur à un cycle de 8 heures à 40°C en présence de 200 ml de SO₂ suivi de 16 heures de ventilation à température ambiante. Durant tout le cycle, deux litres d'eau assurent les conditions d'humidité,
- le test 4 de résistance aux ultraviolets, défini dans la norme ASTM G26 soumet l'échantillon à un rayonnement ultraviolet produit par une lampe au Xénon dans des conditions de température et d'humidité variables,
- le test 5 de vieillissement climatique durant lequel les parements subissent les cycles suivants : 10°C pendant une heure, une montée en température à 95°C (et 95% humidité relative) en 1,5 heures, un plateau de 2 heures à 90°C, un retour à -10°C en 1,5 heures.

Des exemples de poudre permettant d'obtenir le revêtement protecteur selon l'invention sont la poudre à base de résine polyester référencée P 34NF 89 GL commercialisée par la société AKZO ou la poudre à base de polyamide commercialisée sous la dénomination RILSAN de la société ELF-ATOCHEM.

### EXEMPLE 4

L'exemple 4 concerne un verre à couches déposées sous vide, utilisé comme allège.

Le substrat de verre est un verre flotté silico-sodo-calcique clair de 4 mm d'épaisseur.

Il est muni d'un empilement de couches minces déposées de manière connue par pulvérisation cathodique comprenant une première couche d'alliage nickel-chrome (50/50) nitruré de 7 nm d'épaisseur surmontée d'une seconde couche d'oxyde de titane TiO₂ de 8 nm d'épaisseur (ce type de produit est commercialisé sous la dénomination COOL-LITE SN 150 par la société SAINT-GOBAIN VITRAGE).

Après le dépôt de l'empilement, le substrat est lavé. On projette ensuite la poudre de polyester dont la référence commerciale a été indiquée ci-dessus à l'aide de pistolets de distribution de structure usuelle avec assistance électrostatique, lesdits pistolets étant animés d'un mouvement de va-et-vient selon un axe approximativement perpendiculaire à l'axe de défilement du substrat en verre, de manière à ce que les jets de poudre issus de l'ensemble des pistolets puissent atteindre la totalité de la surface à recouvrir.

On fait ensuite passer le substrat ainsi traité dans un tunnel à infrarouges pendant 5 minutes afin de durcir la poudre de polyester en faisant réticuler le polymère qu'elle contient. A la fin de cette opération de chauffage, on obtient un revêtement continu de 80 à 100 micromètres d'épaisseur et d'aspect lisse.

### EXEMPLE 5

L'exemple 5 est similaire à l'exemple 4, la seule différence étant que, cette fois, l'empilement de couches minces déposées sous vide ne contient qu'une couche en nitrure de titane d'une épaisseur de 15 nm (ce produit est commercialisé sous le nom de COOL-LITE TB 140 par la société SAINT-GOBAIN VITRAGE).

### EXEMPLE 6

L'exemple 6 est similaire à l'exemple 4 excepté qu'entre le lavage et le dépôt de la poudre de polyester un agent promoteur d'adhérence à base de silane, le silane est choisi dans la famille des organo-trialkoxysilanes, et est ici à base d'amino-propyl-triéthoxysilane H₂N - (CH₂)₃ - Si - O(C₂H₅)₃- est appliqué sur la dernière couche de l'empilement de couches minces en oxyde de titane.

### EXEMPLE 7

L'exemple 7 est similaire à l'exemple 5, excepté qu'entre le lavage et le dépôt de la poudre le même agent promoteur d'adhérence à base de silane est appliqué sur la dernière couche de l'empilement de couches minces en nitrure de titane.

Les parements de façade de type allège selon ces quatres exemples 4 à 7 ont été soumis aux tests d'adhérence, de dureté et de durabilité décrits précédemment. Dans tous les cas, le revêtement protecteur selon l'invention n'est pas arraché de la surface avec une force allant jusqu'à 70 kg/cm². Il n'est pas non plus transpercé par l'application d'une bille de 0,75 mm de diamètre sous une force de 20 N. De plus, ces revêtements passent avec succès les trois tests de durabilité. On note l'absence de piqûre, de bulle, de décollement et de décoloration.

En conclusion, on peut dire que les revêtements de vernis protecteurs selon l'invention, aussi bien ceux adaptés à la protection des miroirs que ceux adaptés à la protection des parements de panneaux de façade dits « allèges », sont suffisamment durables et efficaces dans leur rôle de protection, notamment face aux agressions chimiques . Par ailleurs, leur mode d'obtention est remarquablement simple, non polluant et rapide. Leur présence peut même permettre de simplifier l'empilement de couches des miroirs classiques, en supprimant éventuellement la couche de cuivre.

L'invention est ainsi très souple de mise en oeuvre et permet d'adapter au mieux le produit, qu'il s'agisse d'allège ou de miroir, en fonction du niveau de durabilité chimique et/ou mécanique requis ainsi que du coût de production : différents paramètres peuvent pour ce faire être ajustés, notamment le choix de la poudre, l'épaisseur du revêtement qui en est issu ou le choix de la séquence de couches sous-jacentes à celui-ci.

## Revendications

1. Procédé de dépôt d'un revêtement superficiel de vernis protecteur sur un élément vitré à couche(s) et essentiellement opaque sous forme d'un miroir à couche d'argent ou d'un parement de panneau de façade du type allège, **caractérisé en ce qu'**on projette une poudre ou un mélange de poudres comprenant au moins une résine en polymère à base de polyester, polyuréthane, polyamide, polyacrylique et éventuellement des charges et/ou pigment(s), sur ledit élément vitré « côté couche(s) », sur la couche d'argent du miroir ou sur la (les) couche(s) minces du parement de panneaux de façade, puis on laisse la poudre coalescer et durcir sur l'élément vitré pour obtenir le revêtement continu et solide.

2. Procédé de dépôt selon la revendication 1, **caractérisé en ce que** la coalescence et le durcissement de la poudre ou du mélange de poudres s'effectuent par traitement thermique de l'élément vitré après la projection, de préférence sous forme d'un chauffage à une température comprise entre 60 et 250° C pendant un laps de temps de 3 à 30 minutes, notamment par rayonnement infrarouges.

3. Procédé de dépôt selon l'une des revendications précédentes, **caractérisé en ce qu'**on préchauffe l'élément vitré avant la projection de la poudre ou du mélange de poudres.

4. Procédé de dépôt selon l'une des revendications précédentes, **caractérisé en ce que** le dépôt se fait en une unique projection.

5. Procédé de dépôt selon l'une des revendications précédentes, **caractérisé en ce qu'**on dépose une quantité de poudre(s) suffisante pour obtenir un revêtement de vernis protecteur ayant une épaisseur d'au moins 30 micromètres notamment entre 30 et 120 micromètres, notamment entre 40 et 100 micromètres.

6. Procédé de dépôt selon l'une des revendications précédentes, **caractérisé en ce qu'**il est assisté par champ électrostatique.

7. Procédé de dépôt selon d'une des revendications précédentes, **caractérisé en ce qu'**on prétraite avant projection la couche d'argent du miroir avec un agent promoteur d'adhérence du type silane.

8. Procédé de dépôt selon l'une des revendications 1 à 6, **caractérisé en ce qu'**on prétraite avant projection la dernière couche de l'empilement de couche(s) mince(s) du parement de panneau avec un agent promoteur d'adhérence du type silane et **en ce que** la résine choisie pour le revêtement protecteur est à base de polyester(s).

## Patentansprüche

1. Verfahren zum Aufbringen einer Oberflächenbeschichtung aus einem Schutzlack auf ein im Wesentlichen opakes, beschichtetes Glaselement in Form eines mit Silber belegten Spiegels oder einer abgestützten Fassadenplatte, **dadurch gekennzeichnet, dass** ein Pulver oder Pulvergemisch, das mindestens ein Polymerharz auf der Basis eines Polyesters, Polyurethans, Polyamids und Polyacrylharzes und gegebenenfalls Füllstoffe und/oder Pigment/e umfasst, auf die beschichtete Seite des Glaselements, auf die Silberschicht des Spiegels oder die dünne/n Schicht/en der Fassadenplatte, gespritzt und anschließend das Pulver auf dem Glaselement koaleszieren und aushärten gelassen wird, um die ununterbrochene und feste Beschichtung zu erhalten.

2. Beschichtungsverfahren nach Anspruch 1, **dadurch gekennzeichnet, dass** Koaleszieren und Aushärten des Pulvers oder Pulvergemischs durch Wärmebehandlung des Glaselements nach dem Aufspritzen, vorzugsweise durch 3- bis 30-minütiges Erhitzen bei einer Temperatur von 60 bis 250 °C, insbesondere durch Infrarotstrahlung, erfolgen.

3. Beschichtungsverfahren nach einem der vorhergehenden Ansprüche, **dadurch gekennzeichnet, dass** das Glaselement vor dem Aufspritzen des Pulvers oder Pulvergemischs vorerwärmt wird.

4. Beschichtungsverfahren nach einem der vorhergehenden Ansprüche, **dadurch gekennzeichnet, dass** durch einen einzigen Spritzvorgang beschichtet wird.

5. Beschichtungsverfahren nach einem der vorhergehenden Ansprüche, **dadurch gekennzeichnet, dass** eine Menge an Pulver/n aufgebracht wird, die ausreicht, eine Schutzlackbeschichtung zu erhalten, deren Dicke mindestens 30 Mikrometer, insbesondere zwischen 30 und 120 Mikrometern und speziell zwischen 40 und 100 Mikrometern beträgt.

6. Beschichtungsverfahren nach einem der vorhergehenden Ansprüche, **dadurch gekennzeichnet, dass** es von einem elektrostatischen Feld unterstützt wird.

7. Beschichtungsverfahren nach einem der vorhergehenden Ansprüche, **dadurch gekennzeichnet, dass** die Silberschicht des Spiegels vor dem Spritzvorgang mit einem Haftmittel wie einem Silan vorbehandelt wird.

8. Beschichtungsverfahren nach einem der Ansprüche 1 bis 6, **dadurch gekennzeichnet, dass** die letzte Schicht des Aufbaus aus dünner/dünnen Schicht/en der Fassadenplatte vor dem Spritzvorgang mit einem Haftmittel wie einem Silan vorbehandelt wird, und dass das für die Schutzbeschichtung ausgewählte Harz auf der Basis von Polyester/n ist.

## Claims

1. Process for the deposition of a surface, protective, varnish covering on a glazed element having coatings and essentially opaque in the form of a mirror having a silver coating or a facade panel facing block of the spandrel glass type, **characterized in that** a powder or a mixture of powders incorporating at least one polymer resin based on polyester, polyurethane, polyamide, polyacrylic and optionally fillers and/or pigments is sprayed onto said glazed element on the "coating side", on the silver coating of the mirror or on the thin coating or coatings of the facade panel facing block and then the powder is allowed to coalesce and harden on the glazed element in order to obtain the continuous, solid covering.

2. Deposition process according to claim 1, **characterized in that** the coalescence and hardening of the powder or mixture of powders takes place by a heat treatment of the glazed element following spraying, preferably in the form of heating at a temperature between 60 and 250°C for a time period of 3 to 30 minutes and in particular by infrared radiation.

3. Deposition process according to one of the preceding claims, **characterized in that** the glazed element is preheated prior to the spraying of the powder or mixture of powders.

4. Deposition process according to one of the preceding claims, **characterized in that** deposition takes place in a single spraying operation.

5. Deposition process according to one of the preceding claims, **characterized in that** an adequate powder quantity is deposited to obtain a protective varnish covering with a thickness of at least 30 micrometers, particularly between 30 and 120 micrometers and more especially between 40 and 100 micrometers.

6. Deposition process according to one of the preceding claims, **characterized in that** it is electrostatic field assisted.

7. Deposition process according to one of the preceding claims, **characterized in that** the silver coating of the mirror is pretreated, prior to spraying, with an adhesion promoting agent of the silane type.

8. Deposition process according to one of the claims 1 to 6, **characterized in that**, prior to spraying, pretreatment takes place of the final coating of the thin coating stack of the panel facing block with an adhesion promoting agent of the silane type and **in that** the resin chosen for the protective covering is polyester-based.
